# EUROPÄISCHE PATENTSCHRIFT

(11) **EP 4 596 909 B1**
(45) Veröffentlichungstag und Bekanntmachung des Hinweises auf die Patenterteilung: **12.08.2026**
(21) Anmeldenummer: 25154850.9
(22) Anmeldetag: 30.01.2025
(51) Int. Cl.: F16C 17/24, F16C 35/02, F16C 37/00, F04D 29/056, F04D 29/58, F16C 32/06

(54) **GEKÜHLTES AERODYNAMISCHES AXIALLAGER SOWIE TURBOKOMPRESSOR MIT EINEM SOLCHEN AXIALLAGER**
COOLED AERODYNAMIC AXIAL BEARING AND TURBOCOMPRESSOR HAVING SUCH AN AXIAL BEARING
PALIER AXIAL AÉRODYNAMIQUE REFROIDI ET TURBOCOMPRESSEUR DOTÉ D'UN TEL PALIER AXIAL

(30) Priorität: 31.01.2024 DE 102024102694
(43) Veröffentlichungstag der Anmeldung: 06.08.2025
(73) Patentinhaber: ebm-papst Mulfingen GmbH & Co. KG, 74673 Mulfingen (DE)
(72) Erfinder: Dobrica, Mihai B., 69124 Heidelberg (DE)
(74) Vertreter: Staeger & Sperling Partnerschaftsgesellschaft mbB

(56) Entgegenhaltungen:
- WO-A1-2018/078150
- DE-A1- 102021 203 593
- DE-T5- 112017 004 420
- US-B2- 11 603 884

## Beschreibung

Die Erfindung betrifft ein gekühltes aerodynamisches Axiallager zur axialen Lagerung einer sich entlang einer Rotationsachse erstreckenden Welle für einen Turbokompressor sowie einen Turbokompressor mit einem solchen Lager, wobei es sich hierbei insbesondere um einen ölfreien Hochgeschwindigkeits-Turbokompressor handelt.

Aerodynamische Lager, welche auch als aerostatische Lager oder Luftlager bezeichnet werden, sowie auch ihr Einsatz in Turbokompressoren sind im Stand der Technik bekannt, wobei Turbokompressoren beispielsweise als Axial-, Radial- oder Diagonalkompressoren ausgebildet sein können und insbesondere Radialkompressoren auch als Zentrifugalkompressoren oder Radialverdichter bezeichen bar sind.

Das grundlegende Wirkprinzip solcher aerodynamischen Lager besteht darin, dass die Lagerungspartner durch einen dünnen Gasfilm bzw. ein dünnes Gaspolster getrennt sind, sodass zwischen den Lagerungspartnern eine stick-slip-freie und reibungsfreie Bewegung mit großer Genauigkeit ermöglicht wird.

Bezogen auf Turbokompressoren wird vorzugsweise sowohl eine axiale Lagerung als auch eine radiale Lagerung eines Flügelrades des Kompressors bzw. einer Welle zur Aufnahme des Flügelrades durch aerodynamische Lager realisiert.

Zumeist wird dafür an der Welle eine mit der Welle drehfest verbundene Wellenmanschette vorgesehen, welche zur Ausbildung der axialen Lagerung zwischen zwei Axiallagerscheiben angeordnet ist.

Dabei ist problematisch, dass es trotz der reibungsfreien Lagerung an den Axiallagerscheiben zu einer nachteilhaften Wärmeentwicklung kommen kann, welche insbesondere bei Turbokompressoren bei Kühlanwendungen höchst problematisch ist, da dadurch beispielsweise in ein von dem Turbokompressor gefördertes bzw. verdichtetes Kühlfluid zusätzlich Wärme eingebracht werden würde.

Bezogen auf Strömungsmaschinen im Allgemeinen, schlägt die DE 10 2021 203 593 A1 beispielsweise vor, die Axiallagerscheiben unmittelbar durch einen jeweils angrenzenden oder in der jeweiligen Axiallagerscheibe ausgebildeten Kühlkanal zu kühlen. Dabei ist jedoch nachteilhaft, dass die Vielzahl von Kühlkanälen eine aufwändige Abdichtung und eine aufwändige Fluidführung bedingt. Bezogen auf direkt in den Axiallagerscheiben vorgesehene Kühlkanäle kommt hinzu, dass die Kanäle die Scheiben strukturell schwächen oder deren Bauraumbedarf erhöhen, wodurch sich diese im Betrieb einfacher verformen und damit die Lagerung stören oder in der Herstellung deutlich aufwändiger und teurer sein können.

Weiter schlägt die DE 10 2021 203 593 A1 auch vor, einen Kühlkanal innerhalb einer Distanzscheibe auszubilden, durch welche die Axiallagerscheiben in einem vorbestimmten Abstand zueinander gehalten wird. Dies hat jedoch ebenfalls mehrere Nachteile, da einerseits wiederum die Struktur geschwächt wird und andererseits eine Abdichtung unmittelbar zu den Axiallagerscheiben notwendig wird, wodurch die notwendige exakt parallele Anordnung der Axiallagerscheiben zueinander an der Distanzscheibe erschwert wird.

Zudem sind aus den Schriften DE 11 2017 004420 T5, US 11 603 884 B2 und WO 2018/078150 A1 den technologischen Hintergrund der vorliegenden Erfindung bestimmende Lager und Aspekte solcher Lager bekannt.

Der Erfindung liegt deshalb die Aufgabe zugrunde, die vorgenannten Nachteile zu überwinden und ein aerodynamisches Lager zur axialen Lagerung einer Welle insbesondere eines Turbokompressors bereitzustellen, durch welches eine kostengünstige Lagerung der Welle bei guter Kühlung bzw. guter Abfuhr einer an dem Lager entstehenden Wärme erreicht werden kann.

Diese Aufgabe wird durch die Merkmalskombination gemäß Patentanspruch 1 gelöst.

Erfindungsgemäß wird ein gekühltes aerodynamisches Axiallager zur axialen Lagerung einer sich entlang einer Rotationsachse erstreckenden Welle vorgeschlagen, wobei es sich insbesondere um die Welle eines Turbokompressors handeln kann, welcher weiter insbesondere für Kühlanwendungen vorgesehen ist, bei welchen also ein Kühlfluid durch den Turbokompressor gefördert bzw. verdichtet wird. Das erfindungsgemäß vorgeschlagene Axiallager weist zwei ringförmige Axiallagerscheiben auf, welche konzentrisch zu der Rotationsachse bzw. zueinander angeordnet sind. Weiter sind die zwei Axiallagerscheiben in Axialrichtung durch eine insbesondere unmittelbar an den Axiallagerscheiben angeordnete bzw. an diesen anliegende Distanzscheibe beabstandet, sodass die Axiallagerscheiben an der Distanzscheibe parallel zueinander und orthogonal zu der Rotationsachse ausgerichtet und von der Distanzscheibe in einem vorbestimmten axialen Abstand zueinander gehalten werden können. Die Distanzscheibe kann auch als Distanzring bezeichnet werden, wobei die im Weiteren beschriebenen Abschnitte an der Distanzscheibe bzw. dem Distanzring jeweils vorzugsweise ringförmig sind. In Axialrichtung ist dadurch entsprechend zwischen den Axiallagerscheiben ein Hohlraum zur Aufnahme einer mit der Welle verbundenen Wellenmanschette gebildet, wobei die Wellenmanschette auch als Wellenkragen bezeichnet werden kann. Weiter kann die Wellenmanschette bzw. der Wellenkragen an der Welle fixiert oder durch die Welle ausgebildet sein. Vorzugsweise weist entsprechend jede der Axiallagerscheiben eine zu dem Hohlraum gewandte Axiallagerfläche auf, welche den Lagerungspartner für eine jeweilige an der Wellenmanschette vorgesehene Lagerfläche bildet. Um nun eine in dem Hohlraum bzw. an den Axiallagerscheiben entstehende Wärme abführen bzw. das Axiallager kühlen zu können, ist erfindungsgemäß vorgesehen, dass die Distanzscheibe sich in Radialrichtung über die Axiallagerscheiben hinaus d.h. nach radialaußen über die Axiallagerscheiben hinaus erstreckt und ausgebildet ist, die Axiallagerscheiben durch einen ringförmigen, radialinneren Abschnitt in dem vorbestimmten axialen Abstand zu halten und durch einen ringförmigen, radialäußeren als Kühlkörper ausgebildeten Kühlabschnitt Wärme aus dem Hohlraum und/oder von den Axialscheiben nach radialaußen abzuführen.

Anders als bei bekannten Lösungen, ist dabei eine Abdichtung der Axiallagerscheiben gegenüber der Distanzscheibe sowie eine strukturelle Schwächung einer dieser Komponenten nicht notwendig.

Im Rahmen der vorliegenden Beschreibung beziehen sich Axialrichtung, Radialrichtung und Umfangsrichtung - soweit nicht im konkreten Fall anders angegeben - auf die Rotationsachse.

Weiter ist gemäß einer Variante zudem vorgesehen, dass die Distanzscheibe in Radialrichtung zwischen dem radialinneren Abschnitt und dem Kühlabschnitt zumindest einen ringförmigen d.h. die Rotationsachse ringförmig umlaufenden Dichtabschnitt aufweist, in welchem die Distanzscheibe zur in Axialrichtung beidseitigen Anlage an einen jeweiligen, insbesondere flexiblen Dichtkörper ausgebildet ist, wobei klarstellend vorgesehen sein kann, dass der Dichtabschnitt insbesondere beabstandet zu den Axiallagerscheiben vorgesehen ist, sodass der Dichtabschnitt keinen negativen Einfluss auf die Ausrichtbarkeit der Axiallagerscheiben an der Distanzscheibe oder auf die Funktion der Distanzscheibe hat.

Vorzugsweise liegt die Distanzscheibe also in Axialrichtung an einer ersten Seite an einem ersten Dichtkörper und an einer gegenüberliegenden zweiten Seite an einem zweiten Dichtkörper an, sodass zu beiden Seiten der Distanzschiebe eine fluiddichte Abdichtung realisiert ist.

Ferner weist das aerodynamische Axiallager ein Lagergehäuse auf, welches über einen ersten Gehäuseabschnitt und einen zweiten Gehäuseabschnitt verfügt, wobei diese vorzugsweise jeweils als ein Gehäuseteil bzw. eine Gehäuseschale ausgebildet sind. Der erste Gehäuseabschnitt bzw. das erste Gehäuseteil und der zweite Gehäuseabschnitt bzw. das zweite Gehäuseteil weisen jeweils einen Dichtbereich auf, welcher jeweils ausgebildet ist, über einen jeweiligen Dichtkörper an der Distanzscheibe bzw. am Dichtabschnitt der Distanzscheibe anzuliegen und einen dadurch durch das Lagergehäuse gebildeten radialinneren Axiallagerraum fluiddicht von einem radialäußeren Kühlraum zu trennen.

Weiter kann der erste Gehäuseabschnitt bzw. der erste Gehäuseteil und der zweite Gehäuseabschnitt bzw. der zweite Gehäuseteil jeweils einen Klemmbereich aufweisen, welche ausgebildet sind, insbesondere unmittelbar an einer jeweiligen Axialscheibe anzuliegen und die zwei Axialscheiben sowie die mit dem radialinneren Abschnitt dazwischen angeordnete Distanzscheibe in Axialrichtung aufeinander zu pressen und entsprechend in ihrer Ausrichtung und Anordnung zu fixieren.

Weiter können die Gehäuseabschnitte bzw. die Gehäuseteile ausgebildet sein, den Kühlraum gemeinsam mit dem Kühlabschnitt der Distanzscheibe indessen Umfangsrichtung zu begrenzen.

Generell gilt, dass der Kühlraum, welcher auch als Kühlkanal bezeichnet werden kann, vorzugsweise die Rotationsachse konzentrisch und im Wesentlichen vollständig umlaufend ausgebildet ist, sodass das Axiallager über seinen gesamten Umfang gleichmäßig und effizient gekühlt werden kann.

Erfindungsgemäß umläuft der Kühlraum die Rotationsachse ringförmig, umschließt den Kühlabschnitt der Distanzscheibe und ist ausgebildet, von einem Kühlfluid durchströmt zu werden, sodass eine an den Axiallagerscheiben bzw. in dem Hohlraum erzeugte Wärme über die Distanzscheibe in den Kühlraum geleitet und dort über das Kühlfluid abgeführt werden kann.

Ferner kann das aerodynamisches Axiallager die Dichtkörper aufweisen, welche eine vorbestimmte Elastizität besitzen und insbesondere als zu der Rotationsachse konzentrisch angeordnete Dichtringe ausgebildet sind. Die Gehäuseabschnitte bzw. Gehäuseteile sind dabei über ihren jeweiligen Dichtbereich ausgebildet und die Elastizität der Dichtkörper derart gewählt, dass der Axiallagerraum und der Kühlraum ohne eine Verformung der Distanzscheibe voneinander Fluiddicht abgedichtet sind. Dadurch, dass die Distanzscheibe nicht verformt und insbesondere nicht verzogen oder gewölbt wird, bleibt die Ausrichtung der Axiallagerscheiben unbeeinflusst.

Vorzugsweise sind der erste Gehäuseabschnitt und der zweite Gehäuseabschnitt radial außen an dem Kühlraum zueinander durch einen weiteren Dichtkörper abgedichtet, welcher insbesondere als weiterer zu der Rotationsachse konzentrisch angeordneter Dichtring ausgebildet sein kann.

Um die Distanzscheibe bei der Montage des Axiallagers in einfacher Weise konzentrisch zu der Rotationsachse ausrichten zu können, kann vorgesehen sein, dass die Distanzscheibe zumindest eine sich in Axialrichtung erstreckende und/oder sich in Radialrichtung erstreckende Positionierhilfe zur konzentrischen Ausrichtung der Distanzscheibe gegenüber der Rotationsachse aufweist. Eine solche Positionierhilfe kann beispielsweise als zumindest ein sich in Axialrichtung oder Radialrichtung erstreckender Vorsprung ausgebildet sein, welcher sich an einem der Gehäuseabschnitte abstützen und dadurch die Positionierung der Distanzscheibe gegenüber dem Gehäuse festlegen kann.

Wie bereits erwähnt ist vorzugsweise vorgesehen, dass die zwei Axiallagerscheiben jeweils eine dem Hohlraum zugewandte Axiallagerfläche zur Ausbildung eines jeweiligen axialen Gaspolsters in einem jeweiligen Axiallagerspalt zwischen der jeweiligen Axiallagerfläche und der Wellenmanschette für die axiale Lagerung der Welle aufweisen.

Die auch als Wellenkragen bezeichenbare Wellenmanschette kann dabei durch zumindest ein Befestigungselement an der Welle fixiert, integral durch die Welle gebildet und/oder einstückig mit der Welle ausgebildet sein.

Zur Verbesserung der Kühlung kann die Distanzscheibe an ihrem Kühlabschnitt zudem Kühlrippen oder andere Kühlelemente ausbilden oder aufweisen, an welchen bei der Umströmung in dem Kühlraum mit dem Kühlfluid vermehrt Wärme abgegeben werden kann.

Bezogen auf die Rotationsachse ist die Distanzscheibe zudem vorzugsweise rotationssymmetrisch oder punktsymmetrisch ausgebildet.

Ein weiterer Aspekt der Erfindung betrifft einen Turbokompressor mit einem erfindungsgemäß vorgeschlagenen aerodynamischen Axiallager, wobei der Turbokompressor als Radial-, Axial- oder Diagonalkompressor ausgebildet sein kann. Das aerodynamische Axiallager weist ein Lagergehäuse mit einem ersten Gehäuseabschnitt und einem zweiten Gehäuseabschnitt auf. Der erste Gehäuseabschnitt und der zweite Gehäuseabschnitt des Lagergehäuses weisen jeweils einen Dichtbereich auf, welcher jeweils ausgebildet ist, über einen jeweiligen Dichtkörper an der Distanzscheibe anzuliegen und einen dadurch durch das Lagergehäuse gebildeten radialinneren Axiallagerraum fluiddicht von einem radialäußeren Kühlraum zu trennen. Dabei ist vorgesehen, dass der Turbokompressor ein zumindest zweiteiliges Innengehäuse zur Aufnahme einer sich entlang einer Rotationsachse erstreckenden Welle sowie vorzugsweise zur Aufnahme eines die Welle antreibenden Motors aufweist, wobei ein erster Teil des Innengehäuses den ersten Gehäuseabschnitt des Lagergehäuses und ein zweiter Teil des Innengehäuses den zweiten Gehäuseabschnitt des Lagergehäuses bildet. Lagergehäuse und das Innengehäuse des Turbokompressors sind also integral miteinander ausgebildet.

Bei einem solchen Turbokompressor kann zudem vorgesehen sein, dass die Welle oder ein an der Welle angeordnetes Flügelrad ausgebildet ist, einen Fluidstrom des durch den von dem Innengehäuse bestimmten Kühlraum strömenden Kühlfluides zu erzeugen.

Weiter kann die Welle oder ein an der Welle angeordnetes Flügelrad ausgebildet sein, ein Kühlfluid zu komprimieren, wobei es sich bei dem Kühlfluid um das den Kühlraum durchströmende Kühlfluid handelt.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: zweidimensionale Schnittdarstellung eines aerodynamischen Axiallagers;
- Fig. 2: perspektivische Schnittdarstellung eines aerodynamischen Axiallagers.

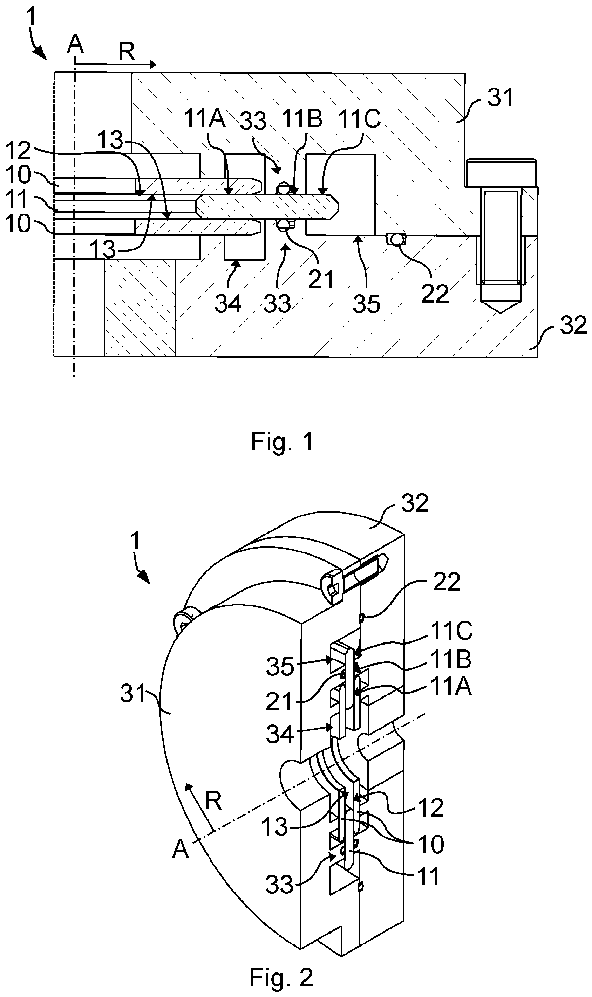

Die Figuren sind beispielhaft schematisch und stellen jeweils ein gekühltes aerodynamisches Axiallager 1 in einer Schnittdarstellung dar, wobei in Figur 1 lediglich ein Teil des Axiallagers 1 abgebildet ist. Gleiche Bezugszeichen in den Figuren weisen auf gleiche funktionale und/oder strukturelle Merkmale hin, sodass einzelne Merkmale nicht für jede Figur beschrieben sein müssen.

Das gekühlte aerodynamische Axiallager 1 weist für die axiale Lagerung einer nicht dargestellten Welle zwei sich um eine Rotationsachse A der Welle ringförmig erstreckende Axiallagerscheiben 10 sowie eine dazwischen angeordnete und die Axiallagerscheiben 10 in einem vorbestimmten axialen Abstand haltende Distanzscheibe 11 auf, sodass entlang der Rotationsachse A zwischen den Axiallagerscheiben 10 ein nach radialaußen durch die Distanzscheibe 11 begrenzter Hohlraum 12 gebildet wird.

Wesentlich hierbei ist, dass die Distanzscheibe 11 sich in Radialrichtung R über die Axiallagerscheiben 10 hinaus erstreckt und ausgebildet ist, zugleich die Axiallagerscheiben 10 durch einen die Rotationsachse A ringförmig umlaufenden radialinneren Abschnitt 11A in dem vorbestimmten Abstand zu halten und an einem die Rotationsachse A ringförmig umlaufenden Kühlabschnitt 11C Wärme aus dem Hohlraum 12 und/oder von den Axiallagerscheiben 10 abzuführen.

Dabei sind die Axiallagerscheiben 10 und Distanzscheibe 11 in einem zwei Gehäuseabschnitte 31, 32 aufweisenden Gehäuse gehalten, wobei die Gehäuseabschnitte 31, 32 jeweils Dichtbereiche 33 aufweisen, welche über einen dazwischenliegenden und als O-Ring bzw. Dichtring ausgebildeten Dichtkörper 21 auf einen Dichtabschnitt 11B der Distanzscheibe 11 wirken, sodass an dem zwischen dem radialinneren Abschnitt 11A und dem Kühlabschnitt 11C liegenden Dichtabschnitt 11B eine Dichtebene gebildet wird. Hierdurch kann ein radialinnerer Axiallagerraum 34 des Gehäuses gegenüber einen radialäußeren Kühlraum 35 fluiddicht getrennt werden, sodass der im Kühlraum 35 angeordnete Kühlabschnitt 11C der Dichtscheibe 11 von Fluid umströmt und die Wärme abtransportiert werden kann.

Da die Dichtbereiche 33 mit den Dichtkörpern 21 abgestimmt sind, den Dichtabschnitt 11B bzw. den gesamten Distanzring 11 nicht zu verformen, werden die Axiallagerscheiben 10 und deren zu dem Hohlraum 12 weisenden Lagerflächen 13 exakt in der gewünschten Position gehalten und zugleich gekühlt. Zur weiteren Abdichtung des Kühlraums 35 ist radialaußerhalb ein weiterer Dichtkörper 22 vorgesehen, welcher unmittelbar zwischen den Gehäuseabschnitten 31, 32 vorgesehen ist und diese gegeneinander abdichtet.

Die Erfindung beschränkt sich in ihrer Ausführung nicht auf die vorstehend angegebenen bevorzugten Ausführungsbeispiele. Sie wird durch die anhängigen Ansprüche definiert.

## Patentansprüche

1. Gekühltes aerodynamisches Axiallager (1) zur axialen Lagerung einer sich entlang einer Rotationsachse A erstreckenden Welle für einen Turbokompressor,
aufweisend zwei ringförmige Axiallagerscheiben (10), welche konzentrisch zu der Rotationsachse (A) angeordnet sind,
wobei die zwei Axiallagerscheiben (10) in Axialrichtung durch eine Distanzscheibe (11) beabstandet sind und in Axialrichtung zwischen sich einen Hohlraum (12) zur Aufnahme einer mit der Welle verbundenen Wellenmanschette bilden,
wobei die Distanzscheibe (11) sich in Radialrichtung (R) über die Axiallagerscheiben (10) hinaus erstreckt und ausgebildet ist, die Axiallagerscheiben (10) durch einen ringförmigen, radialinneren Abschnitt (11A) in einem vorbestimmten axialen Abstand zu halten und durch einen ringförmigen, radialäußeren als Kühlkörper ausgebildeten Kühlabschnitt (11C) Wärme aus dem Hohlraum (12) und/oder von den Axialscheiben (10) nach radialaußen abzuführen,
**dadurch gekennzeichnet, dass**
das Axiallager (1) ferner ein Lagergehäuse mit einem ersten Gehäuseabschnitt (31) und einem zweiten Gehäuseabschnitt (32) aufweist,
wobei der erste Gehäuseabschnitt (31) und der zweite Gehäuseabschnitt (32) jeweils einen Dichtbereich (33) aufweisen, welcher jeweils ausgebildet ist, über einen jeweiligen, insbesondere flexiblen Dichtkörper (21) an der Distanzscheibe (11) anzuliegen und einen dadurch durch das Lagergehäuse gebildeten radialinneren Axiallagerraum (34) fluiddicht von einem radialäußeren Kühlraum (35) zu trennen, und
wobei der Kühlraum (35) die Rotationsachse (A) ringförmig umläuft, den Kühlabschnitt (11C) der Distanzscheibe (11) umschließt und ausgebildet ist, von einem Kühlfluid durchströmt zu werden.

2. Aerodynamisches Axiallager nach Anspruch 1,
wobei die Distanzscheibe (11) in Radialrichtung (R) zwischen dem radialinneren Abschnitt (11A) und dem Kühlabschnitt (11C) zumindest einen ringförmigen Dichtabschnitt (11B) aufweist, in welchem die Distanzscheibe (12) zur in Axialrichtung beidseitigen Anlage an einen jeweiligen insbesondere flexiblen Dichtkörper (21) ausgebildet ist.

3. Aerodynamisches Axiallager nach einem der vorhergehenden Ansprüche,
ferner umfassend die Dichtkörper (21), welche eine vorbestimmte Elastizität aufweisen und insbesondere als zu der Rotationsachse (A) konzentrisch angeordnete Dichtringe (21) ausgebildet sind,
wobei die Gehäuseabschnitte (31, 32) über ihren jeweiligen Dichtbereich (33) ausgebildet sind und die Elastizität der Dichtkörper (21) derart gewählt ist, den Axiallagerraum (34) und den Kühlraum (35) ohne eine Verformung der Distanzscheibe (11) voneinander abzudichten.

4. Aerodynamisches Axiallager nach einem der vorhergehenden Ansprüche,
wobei der erste Gehäuseabschnitt (31) und der zweite Gehäuseabschnitt (32) radial außen an dem Kühlraum (35) zueinander durch einen weiteren Dichtkörper (22) abgedichtet sind, welcher insbesondere als weiterer zu der Rotationsachse (A) konzentrisch angeordneter Dichtring (22) ausgebildet ist.

5. Aerodynamisches Axiallager nach einem der vorhergehenden Ansprüche,
wobei die Distanzscheibe (11) zumindest eine sich in Axialrichtung erstreckende und/oder sich in Radialrichtung (R) erstreckende Positionierhilfe zur konzentrischen Ausrichtung der Distanzscheibe (11) gegenüber der Rotationsachse (A) aufweist.

6. Aerodynamisches Axiallager nach einem der vorhergehenden Ansprüche,
wobei die zwei Axiallagerscheiben (10) jeweils eine dem Hohlraum (12) zugewandte Axiallagerfläche (13) zur Ausbildung eines jeweiligen axialen Gaspolsters in einem jeweiligen Axiallagerspalt zwischen der jeweiligen Axiallagerfläche (13) und der Wellenmanschette für die axiale Lagerung der Welle aufweisen.

7. Turbokompressor mit einem aerodynamischen Axiallager nach einem der vorhergehenden Ansprüche,
aufweisend ein zumindest zweiteiliges Innengehäuse zur Aufnahme einer sich entlang einer Rotationsachse erstreckenden Welle,
wobei ein erster Teil des Innengehäuses den ersten Gehäuseabschnitt (31) des Lagergehäuses und ein zweiter Teil des Innengehäuses den zweiten Gehäuseabschnitt (32) des Lagergehäuses bildet.

8. Turbokompressor nach dem vorhergehenden Anspruch,
wobei die Welle oder ein an der Welle angeordnetes Flügelrad ausgebildet ist, einen Fluidstrom des durch den Kühlraum (35) strömenden Kühlfluides zu erzeugen, und/oder
wobei die Welle oder ein an der Welle angeordnetes Flügelrad ausgebildet ist, ein Kühlfluid zu komprimieren, wobei es sich bei dem Kühlfluid um das den Kühlraum (35) durchströmende Kühlfluid handelt.

## Claims

1. A cooled aerodynamic thrust bearing (1) for axially mounting a shaft for a turbocompressor extending along an axis of rotation A,
having two annular thrust bearing washers (10) arranged concentrically with respect to the axis of rotation (A),
wherein the two thrust bearing washers (10) are spaced apart in the axial direction by a spacer washer (11) and form a cavity (12) between them in the axial direction for receiving a shaft sleeve connected to the shaft,
wherein the spacer washer (11) extends beyond the thrust bearing washers (10) in the radial direction (R) and is formed to maintain the thrust bearing washers (10) at a predetermined axial distance by means of an annular, radially inner section (11A), and to dissipate heat from the cavity (12) and/or from the thrust washers (10) radially outwards by means of an annular, radially outer cooling section (11C) formed as a heat sink,
**characterized in that**
the thrust bearing (1) further has a bearing housing with a first housing section (31) and a second housing section (32),
wherein the first housing section (31) and the second housing section (32) each have a sealing region (33), each formed to abut the spacer washer (11) via a respective, in particular flexible, sealing body (21) and to separate a radially inner thrust bearing space (34) thereby formed by the bearing housing from a radially outer cooling space (35) in a fluid-tight manner,
wherein the cooling space (35) circumscribes the axis of rotation (A) in an annular manner, encloses the cooling section (11C) of the spacer washer (11), and is formed for a cooling fluid to flow therethrough.

2. The aerodynamic thrust bearing according to claim 1,
wherein the spacer washer (11) has at least one annular sealing section (11B) in the radial direction (R) between the radially inner section (11A) and the cooling section (11C), in which the spacer washer (12) is formed to abut both sides of a respective, in particular flexible, sealing body (21) in the axial direction.

3. The aerodynamic thrust bearing according to any one of the preceding claims,
further comprising the sealing bodies (21) having a predetermined elasticity and formed in particular as sealing rings (21) arranged concentrically with respect to the axis of rotation (A),
wherein the housing sections (31, 32) are formed over their respective sealing regions (33) and the elasticity of the sealing bodies (21) is selected in such a way to seal the thrust bearing space (34) and the cooling space (35) against one another without deformation of the spacer washer (11).

4. The aerodynamic thrust bearing according to any one of the preceding claims,
wherein the first housing section (31) and the second housing section (32) are sealed against one another radially outward of the cooling space (35) by a further sealing body (22) which is formed in particular as a further sealing ring (22) arranged concentrically with respect to the axis of rotation (A).

5. The aerodynamic thrust bearing according to any one of the preceding claims,
wherein the spacer washer (11) has at least one positioning aid extending in the axial direction and/or extending in the radial direction (R) for concentrically aligning the spacer washer (11) with respect to the axis of rotation (A).

6. The aerodynamic thrust bearing according to any one of the preceding claims,
wherein the two thrust bearing washers (10) each have a thrust bearing surface (13) facing the cavity (12) for forming a respective axial gas cushion in a respective thrust bearing gap between the respective thrust bearing surface (13) and the shaft sleeve for axially mounting the shaft.

7. A turbocompressor with an aerodynamic thrust bearing according to any one of the preceding claims,
having an at least two-part inner housing for receiving a shaft extending along an axis of rotation,
wherein a first part of the inner housing forms the first housing section (31) of the bearing housing, and a second part of the inner housing forms the second housing section (32) of the bearing housing.

8. The turbocompressor according to the preceding claim,
wherein the shaft or an impeller arranged on the shaft is formed to generate a fluid flow of the cooling fluid flowing through the cooling space (35), and/or
wherein the shaft or an impeller arranged on the shaft is formed to compress a cooling fluid, wherein the cooling fluid is the cooling fluid flowing through the cooling space (35).

## Revendications

1. Palier axial aérodynamique refroidi (1) pour le support axial d'un arbre s'étendant le long d'un axe de rotation A pour un turbocompresseur,
comprenant deux disques de palier axial (10) annulaires, qui sont disposés de manière concentrique par rapport à l'axe de rotation (A),
les deux disques de palier axial (10) étant espacés en direction axiale par un disque d'espacement (11) et formant entre eux en direction axiale une cavité (12) pour loger un collet d'arbre relié à l'arbre,
le disque d'espacement (11) s'étendant en direction radiale (R) au-delà des disques de palier axial (10) et étant configuré pour maintenir les disques de palier axial (10) à une distance axiale prédéterminée par le biais d'une portion annulaire radialement interne (11A), et pour dissiper de la chaleur vers l'extérieur radial par le biais d'une portion de refroidissement (11C) annulaire, radialement externe et configurée sous forme de dissipateur thermique, depuis la cavité (12) et/ou depuis les disques axiaux (10),
**caractérisé en ce que**
le palier axial (1) comprend en outre un carter de palier comportant une première portion de carter (31) et une deuxième portion de carter (32),
la première portion de carter (31) et la deuxième portion de carter (32) comprenant chacune une zone d'étanchéité (33), laquelle est respectivement configurée pour s'appuyer contre le disque d'espacement (11) par le biais d'un corps d'étanchéité (21) respectif, en particulier flexible, et pour séparer de manière étanche aux fluides un espace de palier axial radialement interne (34), formé de ce fait par le carter de palier, par rapport à un espace de refroidissement radialement externe (35), et
l'espace de refroidissement (35) entourant de manière annulaire l'axe de rotation (A), renfermant la portion de refroidissement (11C) du disque d'espacement (11) et étant configuré pour être traversé par un fluide de refroidissement.

2. Palier axial aérodynamique selon la revendication 1,
le disque d'espacement (11) comprenant, en direction radiale (R) entre la portion radialement interne (11A) et la portion de refroidissement (11C), au moins une portion d'étanchéité (11B) annulaire, dans laquelle le disque d'espacement (12) est configuré pour s'appuyer en direction axiale des deux côtés contre un corps d'étanchéité (21) respectif, en particulier flexible.

3. Palier axial aérodynamique selon l'une des revendications précédentes,
comprenant en outre les corps d'étanchéité (21), lesquels présentent une élasticité prédéterminée et sont en particulier configurés sous forme de bagues d'étanchéité (21) disposées de manière concentrique par rapport à l'axe de rotation (A),
les portions de carter (31, 32) étant configurées par le biais de leur zone d'étanchéité (33) respective, et l'élasticité des corps d'étanchéité (21) étant choisie de telle sorte qu'ils étanchéifient l'espace de palier axial (34) et l'espace de refroidissement (35) l'un par rapport à l'autre sans déformation du disque d'espacement (11).

4. Palier axial aérodynamique selon l'une des revendications précédentes,
la première portion de carter (31) et la deuxième portion de carter (32) étant étanchéifiées l'une par rapport à l'autre, radialement vers l'extérieur au niveau de l'espace de refroidissement (35), par un corps d'étanchéité supplémentaire (22), lequel est en particulier configuré sous forme de bague d'étanchéité supplémentaire (22) disposée de manière concentrique par rapport à l'axe de rotation (A).

5. Palier axial aérodynamique selon l'une des revendications précédentes,
le disque d'espacement (11) comprenant au moins un élément de positionnement s'étendant en direction axiale et/ou s'étendant en direction radiale (R) pour l'alignement concentrique du disque d'espacement (11) par rapport à l'axe de rotation (A).

6. Palier axial aérodynamique selon l'une des revendications précédentes,
les deux disques de palier axial (10) comprenant chacun une surface de palier axial (13) tournée vers la cavité (12) pour former un film de gaz axial respectif dans un entrefer de palier axial respectif entre la surface de palier axial (13) respective et le collet d'arbre pour le support axial de l'arbre.

7. Turbocompresseur comprenant un palier axial aérodynamique selon l'une des revendications précédentes,
comprenant un carter interne au moins en deux parties pour loger un arbre s'étendant le long d'un axe de rotation,
une première partie du carter interne formant la première portion de carter (31) du carter de palier et une deuxième partie du carter interne formant la deuxième portion de carter (32) du carter de palier.

8. Turbocompresseur selon la revendication précédente,
l'arbre ou une roue à aubes disposée sur l'arbre étant configuré pour générer un flux de fluide du fluide de refroidissement s'écoulant à travers l'espace de refroidissement (35), et/ou
l'arbre ou une roue à aubes disposée sur l'arbre étant configuré pour comprimer un fluide de refroidissement, le fluide de refroidissement étant le fluide de refroidissement s'écoulant à travers l'espace de refroidissement (35).
